# EUROPEAN PATENT SPECIFICATION

(11) **EP 4 182 187 B1**
(45) Date of publication and mention of the grant of the patent: **01.10.2025**
(21) Application number: 21751883.6
(22) Date of filing: 19.07.2021
(51) Int. Cl.: B60R 1/06

(54) **A VEHICLE WITH A SIDE VIEW MIRROR ASSEMBLY**
FAHRZEUG MIT EINER SEITENSPIEGELANORDNUNG
VÉHICULE DOTÉ D'UN ENSEMBLE RÉTROVISEUR EXTÉRIEUR

(30) Priority: 20.07.2020 NL 2026097
(43) Date of publication of application: 24.05.2023
(73) Proprietor: DAF Trucks N.V., 5643 TW Eindhoven (NL)
(72) Inventor: VAN DEN HEIJKANT, Rob Adrianus Johannes, 5643 TW Eindhoven (NL); GERGIANAKIS, Ioannis, 5643 TW Eindhoven (NL); RENTEMA, Date Willem Egbert, 5643 TW Eindhoven (NL); VAN DEN BOOGAARD, Franciscus Josephus Frederik, 5643 TW Eindhoven (NL); VAN LOTRINGEN, Bartholomeus Paulus, 5643 TW Eindhoven (NL); WULLEMS, Hendrikus Johannes Marinus, 5643 TW Eindhoven (NL)
(74) Representative: V.O.
(86) International application number: PCT/NL2021/050458
(87) International publication number: WO 2022/019756

(56) References cited:
- US-A- 4 830 326
- US-A1- 2019 126 829
- US-A1- 2020 070 728

## Description

The invention relates to a vehicle, in particular a heavy goods vehicle, with a cabin comprising an A-pillar, a side window having a window frame with a frame section adjacent the A-pillar and a side view mirror assembly, the side view mirror assembly comprising:
- an upper arm and a lower arm for mounting the side view mirror assembly to the frame section, the upper arm having an inner end connected to the frame section, the lower arm having an inner end connected to the frame section;
- a carrier connected between an outer end of the upper arm and an outer end of the lower arm;
- an upper mirror and a lower mirror supported by the carrier;
wherein the upper mirror has a lower edge and the lower mirror has an upper edge, the lower edge of the upper mirror and the upper edge of the lower mirror being spaced from each other for providing a see-through opening between the upper mirror and the lower mirror; wherein the carrier has an interconnection portion extending between the lower edge of the upper mirror and the upper edge of the lower mirror.

Such a vehicle is for example known from WO2018178734A1. This known vehicle comprises a side view mirror assembly having a first mirror and a second mirror each having its own housing. The first mirror and the second mirror are coupled to respective lower and upper arms for mounting the side view mirror assembly to the vehicle. The lower and upper arms are linked by a structural element integrating the first and second mirrors, which structural element is transparent. As a result of the transparent structural element driver direct view visibility is improved whilst structural integrity is still provided to the side view mirror assembly to withstand vibrations to which it is subjected during normal use. However, although the transparent structural element improves direct view visibility during driving dirt can build up on the transparent structural element thus at least partly blocking the direct view. In addition, the transparent structural element adds weight to the vehicle and generates aerodynamic drag resulting in a reduced fuel economy of the vehicle.

Such a vehicle is also known from WO2019135097A1. This known vehicle comprises a side view mirror assembly comprising two mirrors each having its own housing or cover. A spacer actuator is provided for moving the two mirrors relative to each other, between a primary position, wherein the mirrors are at a first distance from each other and a secondary position, wherein the mirrors are at a second distance from each other, the second distance being greater than the first distance. In one embodiment a linker arm links the two mirrors, which linker arm extends parallel to the central axis of the two mirrors, so that on each side of the linker arm a see-through opening is formed delimited by the top of the cover of the lower mirror and by the bottom of the cover the upper mirror and delimited by one of the two sides of the linker arm. Each see-through opening is left open on one side. In another embodiment a linker arm between the top of the cover of the lower mirror and the bottom of the cover the upper mirror is absent and the mirrors are secured to a section of a window frame of the vehicle, in particular the bottom of the cover of the lower mirror and the top of the cover of the upper mirror are connected to the section of the window frame in which at least a part of the spacer actuator is integrated for moving the two mirrors relative to each other. Although, in this vehicle known from WO2019135097A1 the distance between the two mirrors in the primary position can be reduced to zero to reduce aerodynamic drag when compared to the side view mirror assembly of WO2018178734A1, the incorporation of a spacer actuator for the side view mirror assembly not only adds additional weight to the vehicle but also entails additional costs. Further, in the one embodiment of the vehicle known from WO2019135097A1 in which a linker arm extends between the two mirrors parallel to the central axis of the two mirrors, this linker arm still obstructs driver direct view visibility in a more forward direction, while in the other embodiment in which the mirrors are only secured to the section of the window frame of the vehicle additional measures need to be taken to guarantee structural integrity to the side view mirror assembly to withstand vibrations to which it is subjected during normal use. The document US 4830326 A discloses a vehicle according to the preamble of claim 1.

There is thus a need in the field to provide an alternative vehicle with a side view mirror assembly which in a relatively simple mechanical manner provides sufficient driver direct view visibility while also providing sufficient structural integrity to the side view mirror assembly to withstand vibrations to which it is subjected during normal use whilst additionally causing a relatively low amount of aerodynamic drag.

According to the invention at least one of the objects is obtained by providing a vehicle, in particular a heavy goods vehicle, with a cabin comprising an A-pillar, a side window having a window frame with a frame section adjacent the A-pillar and a side view mirror assembly, the side view mirror assembly comprising:
- an upper arm and a lower arm for mounting the side view mirror assembly to the frame section, the upper arm having an inner end connected to the frame section, the lower arm having an inner end connected to the frame section;
- a carrier connected between an outer end of the upper arm and an outer end of the lower arm;
- an upper mirror and a lower mirror supported by the carrier;
wherein the upper mirror has a lower edge and the lower mirror has an upper edge, the lower edge of the upper mirror and the upper edge of the lower mirror being spaced from each other for providing a see-through opening between the upper mirror and the lower mirror; wherein the carrier has an interconnection portion extending between the lower edge of the upper mirror and the upper edge of the lower mirror, wherein the interconnection portion of the carrier extends between outer edges of the upper mirror and the lower mirror, and characterized in that the side view mirror assembly comprises an exterior cover, the exterior cover integrally comprising an upper mirror housing covering a front side of the upper mirror and a lower mirror housing covering a front side of the lower mirror and a bridging part between the upper mirror housing and the lower mirror housing, the bridging part covering a front side of the interconnection portion of the carrier, wherein the shape of the upper mirror housing closely matches the shape of the front side of the upper mirror, wherein the shape of the lower mirror housing closely matches the shape of the front side of the lower mirror, wherein the shape of the bridging part closely matches the shape of the front side of the interconnection portion of the carrier, wherein the bridging part extends between outer edges of the upper mirror housing and the lower mirror housing, the bridging part having a width less than or equal to one third of a width of a smallest one of the main cross section of the upper and lower mirror housing, and wherein the bridging part defines the lateral outer edge of the see-through opening. Since the bridging part extends between outer edges of the upper mirror housing and the lower mirror housing, the bridging part having a width less than or equal to one third of a width of a smallest one of the main cross section of the upper and lower mirror housing the bridging part is located as much as possible in outward direction of the vehicle thereby obstructing driver direct view visibility in a most forward direction as less as possible. By using a side view mirror assembly with such a bridging part and an exterior cover which integrally comprises the upper mirror housing covering the front side of the upper mirror and the lower mirror housing covering the front side of the lower mirror it is possible to provide the side view mirror assembly with sufficient structural integrity to withstand vibrations to which it is subjected during normal use.

In an embodiment of a vehicle according to the invention the lower mirror housing has a beveled upper surface facing the see-through opening, such that the height of the see-through opening enlarges from the interconnection portion of the carrier in a direction towards the frame section.

In a further embodiment of a vehicle according to the invention at least the A-pillar has a shape designed to obtain attached air flows along the side window. By using an A-pillar having a shape designed to obtain attached air flows along the side window, for example by an increased curvature of the A-pillar, the local air velocity in the attached air flow becomes smaller at larger distances from the side window. Since according to the invention the interconnection portion is located as much as possible in outward direction of the vehicle, the interconnection portion will not cause detachment of the air flow along the side window which is beneficial for the aerodynamic properties and thus fuel economy of the vehicle. In particular, the A-pillar region has a specially designed shape in order to have attached air flow up to large yaw angles (about 10 degrees). This shape has been realized by a well-designed variation of the local radius (in Z-cross-section). Because of the attached flow, the local air velocities in the A-pillar region are large; larger then when the flow is separated. Therefore it is even more beneficial with regard to the air drag to have the interconnection portion between the two mirror housings as much outward as possible.

In a still further embodiment of a vehicle according to the invention the carrier is constructed of an aluminum tube coated with a plastic including glass fibers. By making the carrier of an aluminum tube coated with a plastic including glass fibers the structural requirements for a side view mirror can be met in a relatively easy mechanical manner for an interconnection portion which is positioned as much as possible in outward direction of the vehicle. It is preferred to make the exterior cover of plastics. It is in particular advantageous to construct the exterior cover such as to reduce aerodynamic drag.

In an embodiment of a vehicle according to the invention the see-through opening between the upper mirror and the lower mirror has a height of at least 120 mm. By using the present invention it is possible to provide a large see-through opening having a height of at least 120 mm whilst still being able to meet the structural requirements in a relatively easy manner.

In an embodiment of a vehicle according to the invention the side view mirror assembly comprises an upper cover covering a front side of the upper arm and a lower cover covering a front side of the lower arm. The exterior cover, the upper cover and the lower cover can be integrally formed. In a further embodiment of a vehicle according to the invention the inner end of the upper arm and the inner end of the lower arm are connected to the frame section by an upper arm hinge and a lower arm hinge, respectively. In another embodiment of a vehicle according to the invention the carrier has an upper carrier end connected to the outer end of the upper arm by an upper carrier hinge and a lower carrier end connected to the outer end of the lower arm by a lower carrier hinge. In an embodiment of a vehicle according to the invention the carrier comprises an upper mirror actuator supporting the upper mirror for pivoting adjustment of the upper mirror relative to the carrier, and a lower mirror actuator supporting the lower mirror for pivoting adjustment of the lower mirror relative to the carrier.

The invention will be further explained with reference to the Figures, in which a non-limiting exemplary embodiment of a vehicle according to the invention is shown:
Fig. 1 schematically in front view shows a vehicle according to an embodiment of the invention with a cabin comprising an A-pillar and a side window having a window frame with a frame section adjacent the A-pillar and a side view mirror assembly;
Fig. 2 schematically in a perspective view shows the side window having a window frame with a frame section adjacent the A-pillar and a side view mirror assembly of Fig. 1 in an enlarged view; and
Fig. 3 schematically shows an exploded view of the side view mirror assembly of Figs. 1 and 2.

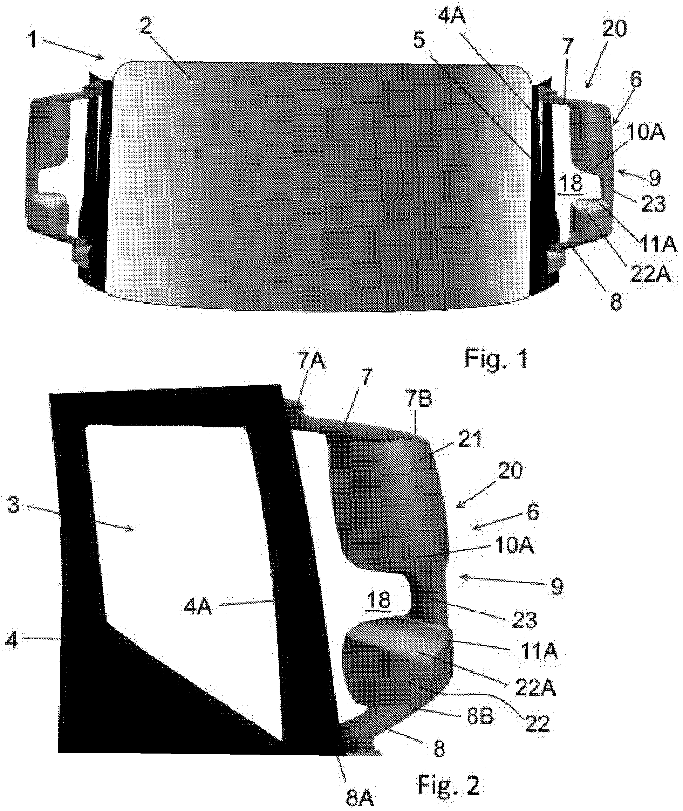

In Fig. 1 an embodiment of a vehicle 1 according to the invention is shown in front view. The vehicle 1 which in particular is a heavy goods vehicle has a cabin 2 comprising an A-pillar 5, a side window 3 with a window frame 4 comprising a frame section 4A adjacent the A-pillar 5 .

A side view mirror assembly 6 is mounted to the frame section 4A of the vehicle 1 by means of an upper arm 7 and a lower arm 8 (see also Fig. 2). The upper arm 7 has an inner end 7A connected to the frame section 4A and the lower arm 8 has an inner end 8A connected to the frame section 4A. In the embodiments, the terms describing directions relate to the orientation when the side view mirror assembly 6 is assembled on the vehicle 1 and during normal use. Therefore, the term "forward" or "front" refers to the front of the vehicle 1 and "rear" refers to the back end of the vehicle 1. Similarly, the term "lower" refers to the part closest to the ground on which the vehicle 1 is supported and "upper" means distant or remote from the ground. The term "inner" refers to parts close to the body of the vehicle 1 and the terms "outer" and "outward" refers to parts distant or remote from the body of the vehicle 1. The term "width" refers to a dimension transverse to normal driving direction of vehicle and "height" refers to a dimension as measure from the ground on which the vehicle 1 is supported.

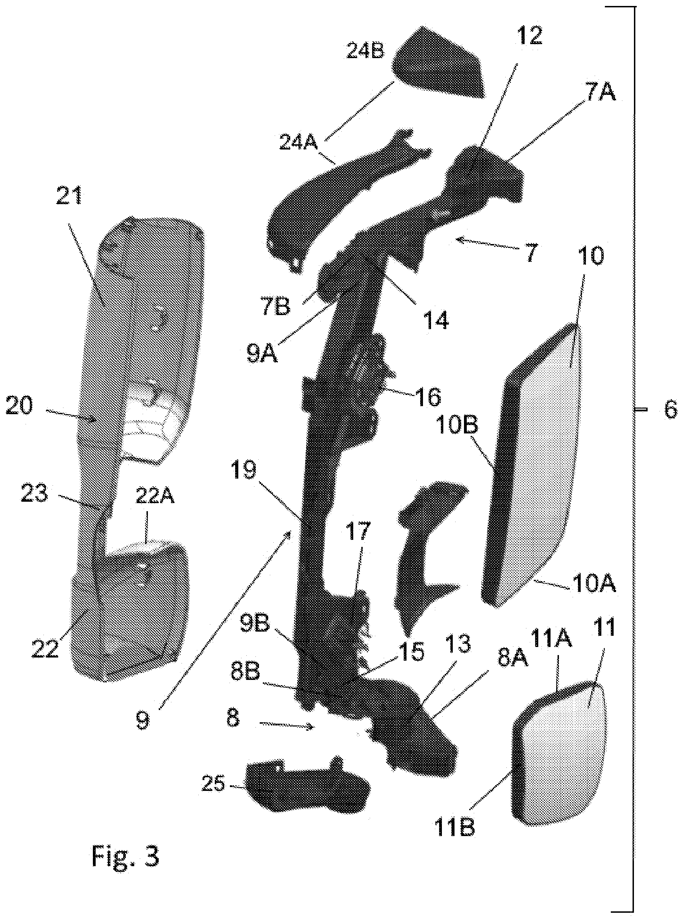

The side view mirror assembly 6 further comprises a carrier 9, preferably constructed of an aluminum tube coated with a plastic including glass fibers, connected between an outer end 7B of the upper arm 7 and an outer end 8B of the lower arm 8. The carrier 9 supports an upper mirror 10 and a lower mirror 11 (see Fig. 3). In order to orient the side view mirror assembly 6 and the upper and lower mirrors 10, 11 in a correct viewing position for a driver of the vehicle 1 the inner end 7A of the upper arm 7 and the inner end 8A of the lower arm 8 are connected to the frame section 4A by an upper arm hinge 12 and a lower arm hinge 13, respectively. In addition, the carrier 9 has an upper carrier end 9A connected to the outer end 7B of the upper arm 7 by an upper carrier hinge 14 and a lower carrier end 9B connected to the outer end 8B of the lower arm 8 by a lower carrier hinge 15. For pivoting adjustment of the upper mirror 10 relative to the carrier 9, the carrier 9 further comprises an upper mirror actuator 16 supporting the upper mirror 10, and for pivoting adjustment of the lower mirror 11 relative to the carrier 9, the carrier 9 similarly comprises a lower mirror actuator 17 supporting the lower mirror 11. When assembled a lower edge 10A of the upper mirror 10 and an upper edge 11A of the lower mirror 11 are spaced from each other for providing a see-through opening 18 between the upper mirror 10 and the lower mirror 11 as shown in Figures 1 and 2. An interconnection portion 19 of the carrier 9 extends between the lower edge 10A of the upper mirror 10 and the upper edge 11A of the lower mirror 11 and between outer edges 10B, 11B of the upper mirror 10 and the lower mirror 11, respectively. In the embodiments shown in the Figures the see-through opening 18 between the upper mirror 10 and the lower mirror 11 has a height of at least 120 mm.

In order to provide the side view mirror assembly 6 with sufficient structural integrity to withstand vibrations to which it is subjected during normal use the carrier 9, preferably constructed of an aluminum tube coated with a plastic including glass fibers, is used together with an exterior cover 20, made of plastics. The exterior cover 20 integrally comprises an upper mirror housing 21 covering a front side of the upper mirror 10 and a lower mirror housing 22 covering a front side of the lower mirror 11. A bridging part 23 of the exterior cover 20 is arranged between the upper mirror housing 21 and the lower mirror housing 22 and is constructed to cover a front side of the interconnection portion 19 of the carrier 9. In order to reduce aerodynamic resistance as much as possible the shape of the upper mirror housing 21 closely matches the shape of the front side of the upper mirror 10, the shape of the lower mirror housing 22 closely matches the shape of the front side of the lower mirror 11 and the shape of the bridging part 23 closely matches the shape of the front side of the interconnection portion 19 of the carrier 9. As indicated in the shown embodiments the bridging part 23 extends between outer edges of the upper mirror housing 21 and the lower mirror housing 22 and has a width less than or equal to one third of a width of a smallest one of the main cross section of the upper and lower mirror housing 22, 23, such that the bridging part 23 is located as much as possible in outward direction of the vehicle 1 thereby obstructing driver direct view visibility through the see-trough opening 18 in a most forward direction as less as possible. As a result the bridging part 23 defines the lateral outer edge of the see-through opening 18 as e.g. visible in Figure 1. In addition, the exterior cover 20 itself is constructed to reduce aerodynamic drag in any known manner, per se.

As indicated in Figure 3 the side view mirror assembly 6 comprises an upper cover 24A, 24B covering a front side of the upper arm 7 and a lower cover 25 covering a front side of the lower arm 8. In the embodiment shown in the Figures, the outer edges of the upper mirror housing 21, the bridging part 23 and the lower mirror housing 22 are aligned by the outward placement of the bridging part 23. This alignment prevents the vortex generation that is common where two bodies are connected, hence reduces the aerodynamic drag.

The lower mirror housing 22 has a beveled upper surface 22A facing the see-through opening 18 such that the height of the see-through opening 18 enlarges from the interconnection portion 19 of the carrier 9 in a direction towards the frame section 4A, i.e. from the bridging part 23 in a direction towards the frame section 4A.

In the embodiment of the vehicle 1 shown in Figure 1 at least the A-pillar has a shape specifically designed to obtain attached air flows along the side window 3, for example by accordingly adapting the curvature of the A-pillar 5. It is observed here that also other parts of the cabin corner play a role in obtaining such attached air flows. The curvature of the cabin corner, generally starting from the about 30 cm in forward direction of the A-pillar and ending about 10 cm in downstream direction of the A-pillar is also designed to obtain attached air flows along the side window 3. As a result the local air velocity in the attached air flow becomes smaller at larger distances from the side window 3. Since the interconnection portion 19, i.e. the bridging part 23, is located as much as possible in outward direction of the vehicle 1, this interconnection portion 19 and the bridging part 23 will not cause detachment of the air flow along the side window 3 which appears to be beneficial for the aerodynamic properties and thus fuel economy of the vehicle 1.

## Claims

1. A vehicle (1), in particular a heavy goods vehicle, with a cabin (2) comprising an A-pillar (5), a side window (3) having a window frame (4) with a frame section (4A) adjacent the A-pillar (5) and a side view mirror assembly (6), the side view mirror assembly (6) comprising:
- an upper arm (7) and a lower arm (8) for mounting the side view mirror assembly (6) to the frame section (4A), the upper arm (7) having an inner end (7A) connected to the frame section (4A), the lower arm (8) having an inner end (8A) connected to the frame section (4A);
- a carrier (9) connected between an outer end (7B) of the upper arm (7) and an outer end (8B) of the lower arm (8);
- an upper mirror (10) and a lower mirror (11) supported by the carrier (9);
wherein the upper mirror (10) has a lower edge (10A) and the lower mirror (11) has an upper edge (11A), the lower edge (10A) of the upper mirror (10) and the upper edge (11A) of the lower mirror (11) being spaced from each other for providing a see-through opening (18) between the upper mirror (10) and the lower mirror (11); wherein the carrier (9) has an interconnection portion (19) extending between the lower edge (10A) of the upper mirror (10) and the upper edge (11A) of the lower mirror (11), wherein the interconnection portion (19) of the carrier (9) extends between outer edges (10B, 11B) of the upper mirror (10) and the lower mirror (11), and **characterized in that** the side view mirror assembly (6) comprises an exterior cover (20), the exterior cover (20) integrally comprising an upper mirror housing (21) covering a front side of the upper mirror (10) and a lower mirror housing (22) covering a front side of the lower mirror (11) and a bridging part (23) between the upper mirror housing (21) and the lower mirror housing (22), the bridging part (23) covering a front side of the interconnection portion (19) of the carrier (9), wherein the shape of the upper mirror housing (21) closely matches the shape of the front side of the upper mirror (10), wherein the shape of the lower mirror housing (22) closely matches the shape of the front side of the lower mirror (11), wherein the shape of the bridging part (23) closely matches the shape of the front side of the interconnection portion (19) of the carrier (9), wherein the bridging part (23) extends between outer edges (10B, 11B) of the upper mirror housing (21) and the lower mirror housing (22), the bridging part (23) having a width less than or equal to one third of a width of a smallest one of the main cross section of the upper and lower mirror housing (22), and wherein the bridging part (23) defines the lateral outer edge of the see-through opening (18).

2. A vehicle (1) according to claim 1, wherein the lower mirror housing (22) has a beveled upper surface (22A) facing the see-through opening (18), such that the height of the see-through opening (18) enlarges from the interconnection portion (19) of the carrier (9) in a direction towards the frame section (4A).

3. A vehicle (1) according to claim 1 or 2, wherein at least the A-pillar (5) has a shape designed to obtain attached air flows along the side window (3).

4. A vehicle (1) according to any one of the preceding claims, wherein the carrier (9) is constructed of an aluminum tube coated with a plastic including glass fibers.

5. A vehicle (1) according to any one of the preceding claims, wherein the exterior cover (20) is made of plastics.

6. A vehicle (1) according to any one of the preceding claims, wherein the exterior cover (20) is constructed to reduce aerodynamic drag.

7. A vehicle (1) according to any one of the preceding claims, wherein the see-through opening (18) between the upper mirror (10) and the lower mirror (11) has a height of at least 120 mm.

8. A vehicle (1) according to any one of the preceding claims, wherein the side view mirror assembly (6) comprises an upper cover (24A, 24B) covering a front side of the upper arm (7) and a lower cover (25) covering a front side of the lower arm (8).

9. A vehicle (1) according to any one of the preceding claims, wherein the inner end (7A) of the upper arm (7) and the inner end (8A) of the lower arm (8) are connected to the frame section (4A) by an upper arm hinge (12) and a lower arm hinge (13), respectively.

10. A vehicle (1) according to any one of the preceding claims, wherein the carrier (9) has an upper carrier end (9A) connected to the outer end (7B) of the upper arm (7) by an upper carrier hinge (14) and a lower carrier end (9B) connected to the outer end (8B) of the lower arm (8) by a lower carrier hinge (15).

11. A vehicle (1) according to any one of the preceding claims, wherein the carrier (9) comprises an upper mirror actuator (16) supporting the upper mirror (10) for pivoting adjustment of the upper mirror (10) relative to the carrier (9), and a lower mirror actuator (17) supporting the lower mirror (11) for pivoting adjustment of the lower mirror relative to the carrier (9).

## Patentansprüche

1. Fahrzeug (1), insbesondere ein Lastkraftwagen, mit einer Kabine (2), die eine A-Säule (5), ein Seitenfenster (3) mit einem Fensterrahmen (4) mit einem an die A-Säule (5) angrenzenden Rahmenabschnitt (4A) und eine Seitenspiegelanordnung (6) umfasst, wobei die Seitenspiegelanordnung (6) Folgendes umfasst:
- einen oberen Arm (7) und einen unteren Arm (8) zum Befestigen der Seitenspiegelanordnung (6) an dem Rahmenabschnitt (4A), wobei der obere Arm (7) ein inneres Ende (7A) aufweist, das mit dem Rahmenabschnitt (4A) verbunden ist, und der untere Arm (8) ein inneres Ende (8A) aufweist, das mit dem Rahmenabschnitt (4A) verbunden ist;
- einen Träger (9), der zwischen einem äußeren Ende (7B) des oberen Arms (7) und einem äußeren Ende (8B) des unteren Arms (8) verbunden ist;
- einen oberen Spiegel (10) und einen unteren Spiegel (11), die von dem Träger (9) getragen werden;
wobei der obere Spiegel (10) eine Unterkante (10A) und der untere Spiegel (11) eine Oberkante (11A) aufweist, wobei die Unterkante (10A) des oberen Spiegels (10) und die Oberkante (11A) des unteren Spiegels (11) voneinander beabstandet sind, um eine Durchsichtsöffnung (18) zwischen dem oberen Spiegel (10) und dem unteren Spiegel (11) zu schaffen; wobei der Träger (9) einen Verbindungsabschnitt (19) aufweist, der sich zwischen der Unterkante (10A) des oberen Spiegels (10) und der Oberkante (11A) des unteren Spiegels (11) erstreckt, wobei der Verbindungsabschnitt (19) des Trägers (9) sich zwischen den Außenkanten (10B, 11B) des oberen Spiegels (10) und des unteren Spiegels (11) erstreckt, und **dadurch gekennzeichnet ist, dass** die Seitenspiegelanordnung (6) eine Außenabdeckung (20) umfasst, wobei die Außenabdeckung (20) ein oberes Spiegelgehäuse (21), das eine Vorderseite des oberen Spiegels (10) abdeckt, und ein unteres Spiegelgehäuse (22), das eine Vorderseite des unteren Spiegels (11) abdeckt, und ein Brückenteil (23) zwischen dem oberen Spiegelgehäuse (21) und dem unteren Spiegelgehäuse (22) gänzlich umfasst, wobei des Brückenteil (23) eine Vorderseite des Verbindungsabschnitts (19) des Trägers (9) abdeckt, wobei die Form des oberen Spiegelgehäuses (21) eng an die Form der Vorderseite des oberen Spiegels (10) anpasst, wobei die Form des unteren Spiegelgehäuses (22) eng an die Form der Vorderseite des unteren Spiegels (11) anpasst, wobei die Form des Brückenteils (23) eng an die Form der Vorderseite des Verbindungsabschnitts (19) des Trägers (9) anpasst, wobei sich der Brückenteil (23) zwischen den Außenkanten (10B, 11B) des oberen Spiegelgehäuses (21) und des unteren Spiegelgehäuses (22) erstreckt, wobei der Brückenteil (23) eine Breite aufweist, die kleiner oder gleich einem Drittel einer Breite eines kleinsten Hauptquerschnitts des oberen und unteren Spiegelgehäuses (22) ist, und wobei der Brückenteil (23) die seitliche Außenkante der Durchsichtsöffnung (18) definiert.

2. Fahrzeug (1) nach Anspruch 1, wobei das untere Spiegelgehäuse (22) eine abgeschrägte obere Fläche (22A) aufweist, die der Durchsichtsöffnung (18) zugewandt ist, so dass sich die Höhe der Durchsichtsöffnung (18) vom Verbindungsabschnitt (19) des Trägers (9) in Richtung auf den Rahmenabschnitt (4A) vergrößert.

3. Fahrzeug (1) nach Anspruch 1 oder 2, wobei zumindest die A-Säule (5) eine Form aufweist, die so gestaltet ist, dass an ihr entlang der Seitenfenster (3) Luftströme anliegen.

4. Fahrzeug (1) nach einem der vorhergehenden Ansprüche, wobei der Träger (9) aus einem Aluminiumrohr besteht, das mit einem Kunststoff beschichtet ist, der Glasfasern enthält.

5. Fahrzeug (1) nach einem der vorhergehenden Ansprüche, wobei die Außenabdeckung (20) aus Kunststoff besteht.

6. Fahrzeug (1) nach einem der vorhergehenden Ansprüche, wobei die Außenabdeckung (20) so konstruiert ist, dass sie den Luftwiderstand verringert.

7. Fahrzeug (1) nach einem der vorhergehenden Ansprüche, wobei die Durchsichtsöffnung (18) zwischen dem oberen Spiegel (10) und dem unteren Spiegel (11) eine Höhe von mindestens 120 mm aufweist.

8. Fahrzeug (1) nach einem der vorhergehenden Ansprüche, wobei die Seitenspiegelanordnung (6) eine obere Abdeckung (24A, 24B), die eine Vorderseite des oberen Arms (7) abdeckt, und eine untere Abdeckung (25), die eine Vorderseite des unteren Arms (8) abdeckt, umfasst.

9. Fahrzeug (1) nach einem der vorhergehenden Ansprüche, wobei das innere Ende (7A) des oberen Arms (7) und das innere Ende (8A) des unteren Arms (8) durch ein Oberarmgelenk (12) bzw. ein Unterarmgelenk (13) mit dem Rahmenabschnitt (4A) verbunden sind.

10. Fahrzeug (1) nach einem der vorhergehenden Ansprüche, wobei der Träger (9) ein oberes Trägerende (9A) aufweist, das mit dem äußeren Ende (7B) des oberen Arms (7) durch ein oberes Trägergelenk (14) verbunden ist, und ein unteres Trägerende (9B), das mit dem äußeren Ende (8B) des unteren Arms (8) durch ein unteres Trägergelenk (15) verbunden ist.

11. Fahrzeug (1) nach einem der vorhergehenden Ansprüche, wobei der Träger (9) einen oberen Spiegelaktuator (16) umfasst, der den oberen Spiegel (10) zur Schwenkeinstellung des oberen Spiegels (10) relativ zum Träger (9) trägt, und einen unteren Spiegelaktuator (17), der den unteren Spiegel (11) zur Schwenkeinstellung des unteren Spiegels relativ zum Träger (9) trägt.

## Revendications

1. Véhicule (1), en particulier un poids lourd, avec une cabine (2) comprenant un montant A (5), une fenêtre latérale (3) ayant un cadre de fenêtre (4) avec une section de cadre (4A) adjacente au montant A (5) et un assemblage de rétroviseur latéral (6), l'assemblage de rétroviseur latéral (6) comprenant :
- un bras supérieur (7) et un bras inférieur (8) pour monter l'assemblage de rétroviseur latéral (6) sur la section du cadre (4A), le bras supérieur (7) ayant une extrémité intérieure (7A) reliée à la section du cadre (4A), le bras inférieur (8) ayant une extrémité intérieure (8A) reliée à la section du cadre (4A) ;
- un support (9) relié entre une extrémité extérieure (7B) du bras supérieur (7) et une extrémité extérieure (8B) du bras inférieur (8) ;
- un miroir supérieur (10) et un miroir inférieur (11) soutenus par le support (9) ;
dans lequel le miroir supérieur (10) a un bord inférieur (10A) et le miroir inférieur (11) a un bord supérieur (11A), le bord inférieur (10A) du miroir supérieur (10) et le bord supérieur (11A) du miroir inférieur (11) étant espacés l'un de l'autre pour fournir une ouverture transparente (18) entre le miroir supérieur (10) et le miroir inférieur (11) ; dans lequel le support (9) comporte une partie d'interconnexion (19) s'étendant entre le bord inférieur (10A) du rétroviseur supérieur (10) et le bord supérieur (11A) du rétroviseur inférieur (11), dans lequel la partie d'interconnexion (19) du support (9) s'étend entre les bords extérieurs (10B, 11B) du rétroviseur supérieur (10) et du rétroviseur inférieur (11), et **caractérisé en ce que** l'assemblage de rétroviseur latéral (6) comprend un couvercle extérieur (20), le couvercle extérieur (20) comprenant intégralement un boîtier de rétroviseur supérieur (21) couvrant un côté avant du rétroviseur supérieur (10) et un boîtier de rétroviseur inférieur (22) couvrant un côté avant du rétroviseur inférieur (11) et une partie de pontage (23) entre le boîtier de rétroviseur supérieur (21) et le boîtier de rétroviseur inférieur (22), la partie de pontage (23) couvrant un côté avant de la partie d'interconnexion (19) du support (9), dans lequel la forme du boîtier du miroir supérieur (21) correspond étroitement à la forme de la face avant du miroir supérieur (10), dans lequel la forme du boîtier du miroir inférieur (22) correspond étroitement à la forme de la face avant du miroir inférieur (11), dans lequel la forme de la partie de pontage (23) correspond étroitement à la forme de la face avant de la partie d'interconnexion (19) du support (9), dans laquelle la partie de pontage (23) s'étend entre les bords extérieurs (10B, 11B) du boîtier du miroir supérieur (21) et du boîtier du miroir inférieur (22), la partie de pontage (23) ayant une largeur inférieure ou égale à un tiers de la largeur de la plus petite des sections transversales principales du boîtier du miroir supérieur et du boîtier du miroir inférieur (22), et dans laquelle la partie de pontage (23) définit le bord extérieur latéral de l'ouverture transparente (18).

2. Véhicule (1) selon la revendication 1, dans lequel le boîtier inférieur du rétroviseur (22) présente une surface supérieure biseautée (22A) faisant face à l'ouverture transparente (18), de sorte que la hauteur de l'ouverture transparente (18) s'élargit à partir de la partie d'interconnexion (19) du support (9) en direction de la section du cadre (4A).

3. Véhicule (1) selon la revendication 1 ou 2, dans lequel au moins le montant A (5) a une forme conçue pour obtenir des flux d'air associés le long de la fenêtre latérale (3).

4. Véhicule (1) selon l'une quelconque des revendications précédentes, dans lequel le support (9) est constitué d'un tube d'aluminium revêtu d'un plastique comprenant des fibres de verre.

5. Véhicule (1) selon l'une quelconque des revendications précédentes, dans lequel le couvercle extérieur (20) est en plastique.

6. Véhicule (1) selon l'une quelconque des revendications précédentes, dans lequel le couvercle extérieur (20) est conçu pour réduire la traînée aérodynamique.

7. Véhicule (1) selon l'une quelconque des revendications précédentes, dans lequel l'ouverture transparente (18) entre le rétroviseur supérieur (10) et le rétroviseur inférieur (11) a une hauteur d'au moins 120 mm.

8. Véhicule (1) selon l'une quelconque des revendications précédentes, dans lequel l'assemblage de rétroviseur latéral (6) comprend un couvercle supérieur (24A, 24B) couvrant un côté avant du bras supérieur (7) et un couvercle inférieur (25) couvrant un côté avant du bras inférieur (8).

9. Véhicule (1) selon l'une quelconque des revendications précédentes, dans lequel l'extrémité intérieure (7A) du bras supérieur (7) et l'extrémité intérieure (8A) du bras inférieur (8) sont reliées à la section du cadre (4A) par une charnière de bras supérieur (12) et une charnière de bras inférieur (13), respectivement.

10. Véhicule (1) selon l'une quelconque des revendications précédentes, dans lequel le support (9) présente une extrémité supérieure (9A) reliée à l'extrémité extérieure (7B) du bras supérieur (7) par une charnière de support supérieure (14) et une extrémité inférieure (9B) reliée à l'extrémité extérieure (8B) du bras inférieur (8) par une charnière de support inférieure (15).

11. Véhicule (1) selon l'une quelconque des revendications précédentes, dans lequel le support (9) comprend un actionneur de miroir supérieur (16) supportant le miroir supérieur (10) pour le réglage par pivotement du miroir supérieur (10) par rapport au support (9), et un actionneur de miroir inférieur (17) supportant le miroir inférieur (11) pour le réglage par pivotement du miroir inférieur par rapport au support (9).
